# EUROPÄISCHE PATENTANMELDUNG

(11) **EP 1 219 829 A1**
(43) Veröffentlichungstag der Anmeldung: **03.07.2002**
(21) Anmeldenummer: 00200594.0
(22) Anmeldetag: 11.02.2000
(51) Int. Cl.: F03G 3/00

(54) **Rotor**

(71) Anmelder: ROMMEL, Arthur, D-71409 Schwaikheim (DE)
(72) Erfinder: ROMMEL, Arthur, D-71409 Schwaikheim (DE)

(57) **Zusammenfassung**

In einem Rotor mit der Zentralachse (6) sind mehrere Massen (3) zwischen zwei Gleitringen (5,7) gelagert. Die Massenkräfte werden durch die besondere Anordnung in eine rotatrische Kreiskraftkomponente umgeformt. Berücksichtigt man die in den Rotor gesteckte Energie nicht weiter, könnte man annehmen, dass auf diese Weise kostenlose und saubere Energie erzeugt werden kann.

## Beschreibung

Grundlage allgemein in Forschung_und Technik,-"Aufhebung der Fliehkraft im Kreis" , Ursache, -weil im Kreisumgang kein Widerstand, ohne Rückkopplung ! Nun als "Hobbist für "Dienstbarmachung der "Fliehkraft" nach Jahrzenten mit schon vielen Offenlegungen, - präsentiere ich NEUHEITEN ! Mein Widerspruch zur Aufhebung mit Widerständen außerhalb des Kreises (WST) durch das Achsenlager.

### NEUHEITEN mit 4 Zeichnungen(Phase 1-4:)

### Phase 1)

Eingabe vom 20.04.99.
Verkettung aller Fliehkraftkolben mit einem Gleitring zum Widerstand Achsenlager. Kraftlinie halbiert,- Zug WST Rotormasse, - Zug WST Achsenlager.

### Phase 2)

Ergänzung mit einem zweiten Gleitring zum Doppelgleitring zur STBILISERUNG .
Widerstand Rotormasse über Kolbenlager B zum Achsenlager. Mehrleistung vorgegeben mit Kraftlinie zur Achse!

### Phase 3)

Achsen-lager-zugleich als DOPPELGLEITRING direkt Kolbenlager Fliehkraftmasse B.
Widerstand über Achsenlager total! Bitte keine Rückkopplung zur Rotormasse!
Je nach Kolbenzahl ; Schwerkraft mit 15° - und 20° Leistung - Kolbenzahl = je 1/3 (8 und 6) im Kreis ! "SCHWERKRAFT" zur Leistung! zur

### Phase 4)

Vorausplanung: Drehbarer Ring über Achsenlager zur Steurung der Fliehkraftleistung - plus / minus.
Regelbar; - auch betreffs Selbstzerstörung!

Kraft durch Widerstand Rotormasse mit Hebelwirkung der Schwerkraft über Fliehkraftlager B zum Achsenlager NEUTRAL OHNE Rückkopplung zur Rotormasse. Achsenlager fester Widerstand!
Fliehkraft zur Drehkraft! Mathematische Leistungssteigerung durch Drehzahlbeschleunigung!
Beste ENERGIE ! Keine UMWELTBELASTUNG!

### "ROTOR"

Mit Umwandlung der Fliehkraft in eine Kreiskraft, - wäre dem Lehrsatz "Aufhebung der Fliehkraft im Kreis" widersprochen!

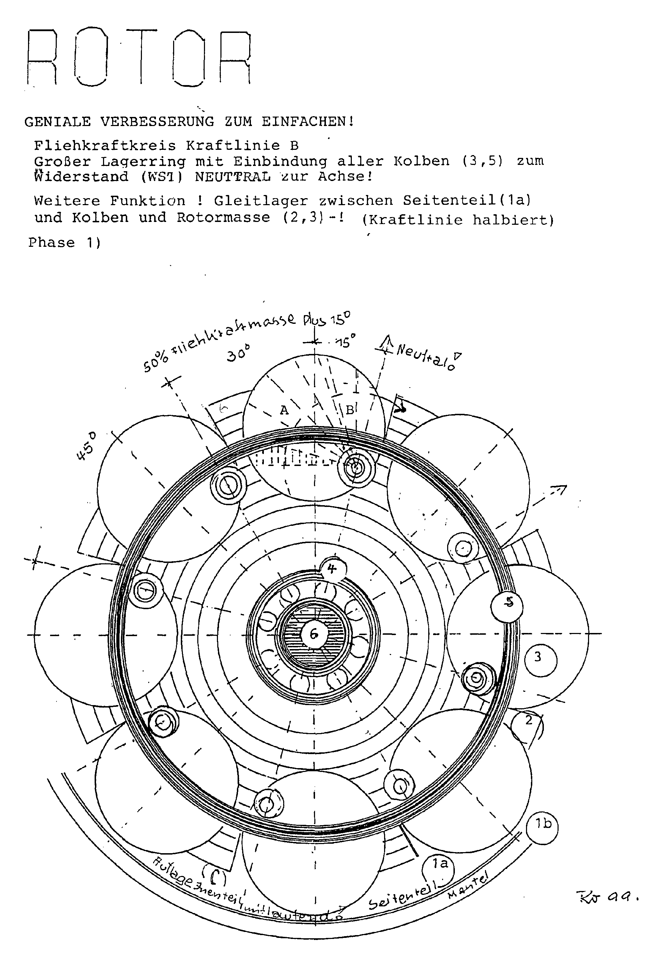

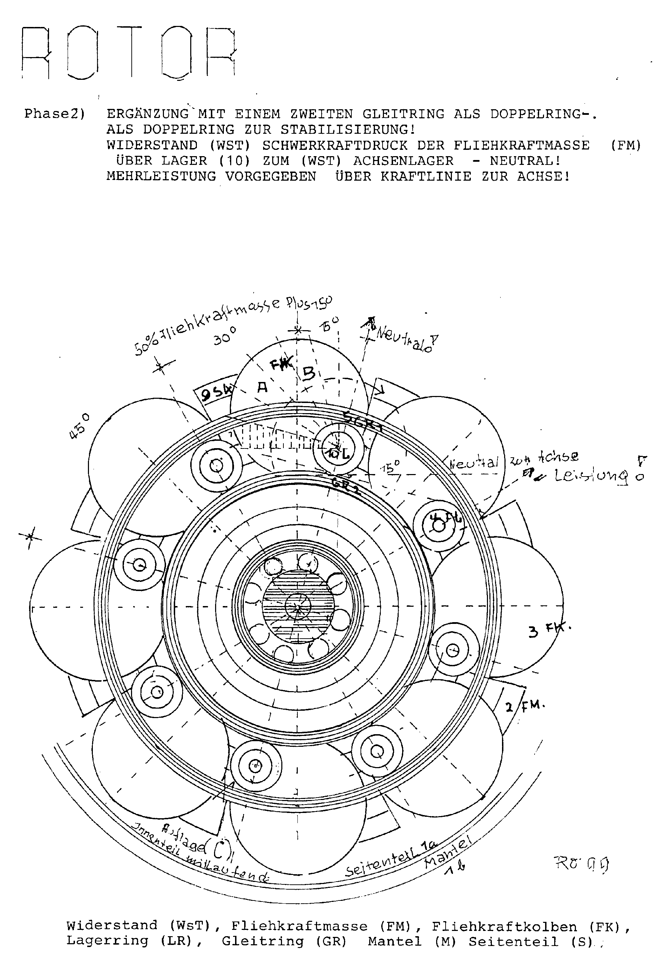

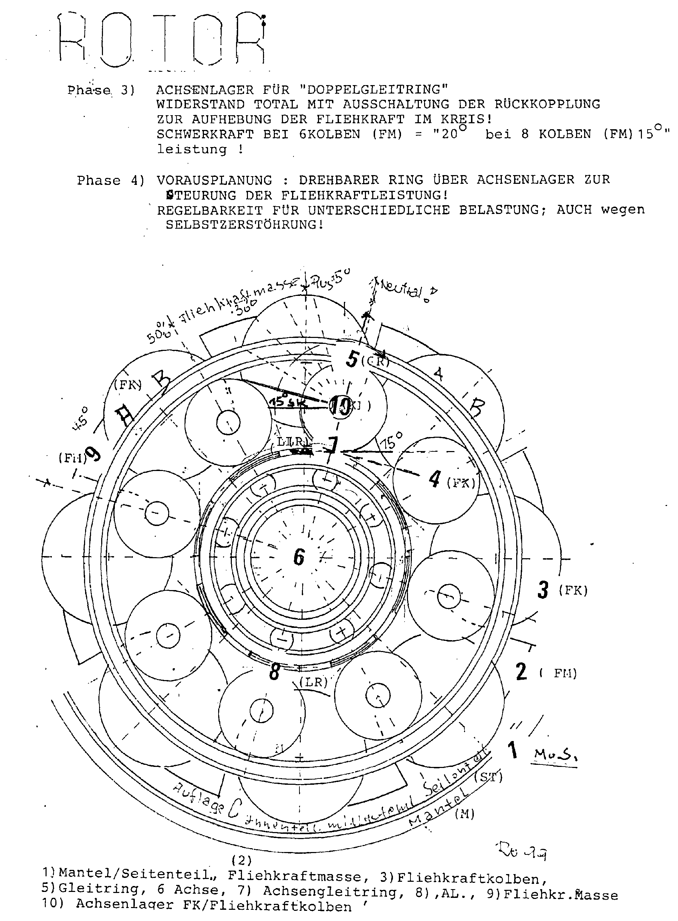

## Patentansprüche

1. Hauptanspruch; - Umwandlung der Fliehkraft in eine Kreiskraft! Leistung Fliehkraft im Kreisumgang. Mathematische Leistungssteigerung mit Drehzahlbeschleunigung-, folglich Nutzbarmachung der Fliehkraft im Kreisumgang für eine saubere Energie! Keine Energie aus der Materie. Gewerblich anwendbar in allen Lagen des Bedarfs. Beste Energie,-Ohne Umweltbelastung!
Kraftlinie A
Widerstand Rotormasse mit Schwerkraft zur Achse
Kraftlinie B
Widerstand Kolbenrollenlager, eingebunden im Doppelgleitring mit Zugkraft zum Achsenlager . NEUTRAL, ohne Rückkopplung zur Rotormasse. Achsenlager fester Widerstand!
(Siehe Beschreibung, -Zeichnungen mit 4 Phasen)
Besondere Beachtung! - Mit DOPPELGLEITRING sind alle FK Kolben eingebunden zur Stabilität im Raum Fliehkraft zum Lastenausgleich aller FK Kolben im Freiraum gegenseitig zum WIDERSTAND ACHSENLAGER.
2) Phase 4)
Vorausplanung: Drehbarer Ring über Achsenlager zur Steurung der Fliehkraftleistung regelbar; - auch betreffs Selbstzerstörung!
3) "Fliehkraft zur DREHKRAFT" Weitere Ansprüche im Inhalt!
